# EUROPÄISCHE PATENTSCHRIFT

(11) **EP 1 692 413 B1**
(45) Veröffentlichungstag und Bekanntmachung des Hinweises auf die Patenterteilung: **08.08.2007**
(21) Anmeldenummer: 04802754.4
(22) Anmeldetag: 18.11.2004
(51) Int. Cl.: F16D 65/14

(54) **SELBSTVERSTÄRKENDE ELEKTROMECHANISCHE FAHRZEUGBREMSE**
SELF-ENERGISING ELECTROMECHANICAL VEHICLE BRAKE
FREIN ELECTROMECANIQUE A AUTORENFORCEMENT

(30) Priorität: 05.12.2003 DE 10356936
(43) Veröffentlichungstag der Anmeldung: 23.08.2006
(73) Patentinhaber: ROBERT BOSCH GMBH, 70442 Stuttgart (DE)
(72) Erfinder: BAUMANN, Dietmar, 71282 Hemmingen (DE); HOFMANN, Dirk, 71636 Ludwigsburg (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71696 Moeglingen (DE)
(86) Internationale Anmeldenummer: PCT/DE2004/002541
(87) Internationale Veröffentlichungsnummer: WO 2005/057041

(56) Entgegenhaltungen:
- DE-A1- 3 500 783
- DE-A1- 10 151 950
- US-B1- 6 305 506

## Beschreibung

### Stand der Technik

Die Erfindung betrifft eine selbstverstärkende elektromechanische Fahrzeugbremsanlage mit den Merkmalen des Oberbegriffs des Anspruchs 1, die zur Verwendung insbesondere in Kraftfahrzeugen vorgesehen ist.

Eine derartige Fahrzeugbremse ist bekannt aus der DE 101 51 950 A1. Die bekannte Fahrzeugbremse ist als Scheibenbremse ausgeführt, die vorliegende Erfindung ist allerdings nicht auf diese Bremsenbauform beschränkt sondern lässt sich auf andere Bremsenbauarten übertragen.

Die bekannte Fahrzeugbremse weist einen Elektromotor und einen Spindeltrieb als elektromechanische Betätigungseinrichtung zum Drücken eines Reibbremsbelags an eine Bremsscheibe zum Erzeugen einer Bremskraft auf. Die Bremsscheibe bildet einen Bremskörper der Fahrzeugbremse. Dem Elektromotor und dem Spindeltrieb kann ein Untersetzungsgetriebe zwischengeschaltet sein. Der Spindeltrieb bildet ein Rotations/Translations-Umsetzungsgetriebe. Grundsätzlich sind auch andere Rotations/Translations-Umsetzungsgetriebe zum Drücken des Reibbremsbelags an den Bremskörper, beispielsweise ein verdrehbarer Nocken, möglich. Auch ist es denkbar, den Elektromotor beispielsweise durch einen Elektromagneten zu ersetzen.

Als Selbstverstärkungseinrichtung weist die bekannte Fahrzeugbremse einen Keilmechanismus mit einem Keil auf, der auf einer der Bremsscheibe abgewandten Rückseite des Reibbremsbelags angeordnet ist. Der Keil stützt sich an einem Widerlager ab, welches in einem Keilwinkel schräg zur Bremsscheibe in deren Drehrichtung verläuft. Zwischen dem Widerlager und der Bremsscheibe besteht ein sich in der einen Drehrichtung der Bremsscheibe verengender Keilspalt. Der Keil muss nicht in strengem Sinn ein Keil sein, es kann auch ein nicht keilförmiges Element verwendet werden, welches zusammen mit dem Widerlager eine Keilwirkung erzeugt.

Zum Bremsen wird der Reibbremsbelag mit der elektromechanischen Betätigungseinrichtung an die den Bremskörper bildende Bremsscheibe gedrückt. Dabei kann der Reibbremsbelag quer oder schräg im Keilwinkel oder einem anderen Winkel verschoben werden. Die drehende Bremsscheibe übt eine Reibungskraft auf den zum Bremsen an sie gedrückten Reibbremsbelag in Richtung des enger werdenden Keilspalts zwischen dem Widerlager und der Bremsscheibe aus, die über eine Keilwirkung des sich am Widerlager abstützenden Keils eine Reaktionskraft erzeugt, welche eine Kraftkomponente quer zur Bremsscheibe aufweist. Diese Kraftkomponente ist eine Andruckkraft, die den Reibbremsbelag zusätzlich zu der von der Betätigungseinrichtung ausgeübten Andruckkraft an die Bremsscheibe drückt. Die Andruck- und die Bremskraft wird dadurch erhöht. Die Selbstverstärkungseinrichtung wandelt die von der drehenden Bremsscheibe auf den an sie gedrückten Reibbremsbelag ausgeübte Reibungskraft in eine zusätzliche Andruckkraft um. Die Selbstverstärkung ist nur für eine Drehrichtung der Bremsscheibe wirksam. Eine Verschiebung des Reibbremsbelags sollte auf einer gekrümmten Bahn mit Zentrum in etwa mit einer gedachten Drehachse der Bremsscheibe oder auch auf einer geraden Bahn in Sekantenrichtung zur Bremsscheibe erfolgen. Zur Erzielung der Selbstverstärkungswirkung muss die von der drehenden Bremsscheibe auf den Reibbremsbelag ausgeübte Reibungskraft den Reibbremsbelag in Richtung des enger werdenden Keilspalts zwischen dem Widerlager und der Bremsscheibe beaufschlagen.

Anstelle eines Keilmechanismus kann auch ein Rampenmechanismus Verwendung finden, der einen beispielsweise gekrümmten anstelle eines geraden Verlaufs aufweist. Zur schnellen Überwindung eines Lüftspalts zwischen der Bremsscheibe und dem Reibbremsbelag zu Beginn einer Bremsung weist der Rampenmechanismus zunächst ein großen Winkel zur Bremsscheibe auf. Bei hohen Andruck- und Bremskräften kann der Rampenwinkel spitz gewählt werden um einen großen Selbstverstärkungsfaktor zu erreichen.

### Erläuterung und Vorteile der Erfindung

Bei der erfindungsgemäßen Fahrzeugbremse mit den Merkmalen des Anspruchs 1 ist der Keil nicht fest mit dem Reibbremsbelag verbunden sondern der Keil und der Reibbremsbelag sind gegeneinander beweglich. Ein Mitnehmer bewirkt, dass sich der Keil in der einen Drehrichtung des Bremskörpers, in der die Selbstverstärkungseinrichtung wirksam ist, mit dem Reibbremsbelag mitbewegt. Dadurch wird die Selbstverstärkungswirkung wie eingangs zum Stand der Technik erläutert erzielt. Bei umgekehrter Drehrichtung des Bremskörpers ist der Reibbremsbelag gegenüber dem Keil verschieblich. Dadurch kommt es nicht zu einer Selbstschwächung der Fahrzeugbremse sondern der Reibbremsbelag wird mit der von der Betätigungseinrichtung aufgebrachten Andruckkraft an den Bremskörper gedrückt. Die erfindungsgemäße Fahrzeugbremse weist somit den Vorteil auf, dass sie eine Selbstverstärkung in einer Drehrichtung des Bremskörpers aufweist und in der anderen Drehrichtung selbsthilfeneutral ist.

Eine Wegbegrenzung für den Reibbremsbelag der erfindungsgemäßen Fahrzeugbremse begrenzt einen Verschiebeweg des Reibbremsbelags in einer entgegengesetzten Richtung, also in der Drehrichtung des Bremskörpers, in der die Selbstverstärkungseinrichtung nicht wirksam ist. Im Vergleich mit Fahrzeugbremsen, die für jede Drehrichtung des Bremskörpers einen Keilmechanismus aufweisen, um eine Selbstverstärkung zu bewirken, hat die erfindungsgemäße Fahrzeugbremse den Vorteil eines einfacheren Aufbaus. Weiterer Vorteil ist, dass eine Betätigungsrichtung immer gleich und unabhängig von einer Drehrichtung des Bremskörpers ist. Außerdem hat die Erfindung den Vorteil dass sie bei Benutzung als Feststellbremse (Parkbremse) selbsthilfeneutral ist.

Die Unteransprüche haben vorteilhafte Ausgestaltungen und Weiterbildungen der im Anspruch 1 angegebenen Erfindung zum Gegenstand.

Gemäß Anspruch 3 wirkt die Betätigungseinrichtung mittelbar über den Keil auf den Reibbremsbelag ein, zur Betätigung der Fahrzeugbremse wird also der Keil verschoben. Dies hat den Vorteil, dass die Betätigungsrichtung unabhängig von einer Drehrichtung des Bremskörpers ist.

Anspruch 4 sieht eine Verschließausgleichseinrichtung vor. Diese hat den Vorteil, dass sich ein Betätigungs- und Verschiebeweg des Keils und des Reibbremsbelags nicht durch Verschleiß des Reibbremsbelag vergrößern.

### Zeichnung

Die Erfindung wird nachfolgend anhand eines in der Zeichnung dargestellten Ausführungsbeispiels näher erläutert. Es zeigen:
- Figur 1: eine vereinfachte Schemadarstellung einer erfindungsgemäßen Fahrzeugbremse in unbetätigtem Zustand mit Blickrichtung radial zu einer gedachten Drehachse einer Bremsscheibe;
- Figur 2: die Fahrzeugbremse aus Figur 1 in betätigtem Zustand;
- Figur 3: die Fahrzeugbremse aus Figur 1 in betätigtem Zustand bei umgekehrter Drehrichtung der Bremsscheibe;
- Figur 4: eine abgewandelte Ausführungsform der Fahrzeugbremse aus Figur 1 gemäß der Erfindung; und
- Figur 5: eine weitere Abwandlung der Fahrzeugbremse aus Figur 1 gemäß der Erfindung.

### Beschreibung der Ausführungsbeispiele

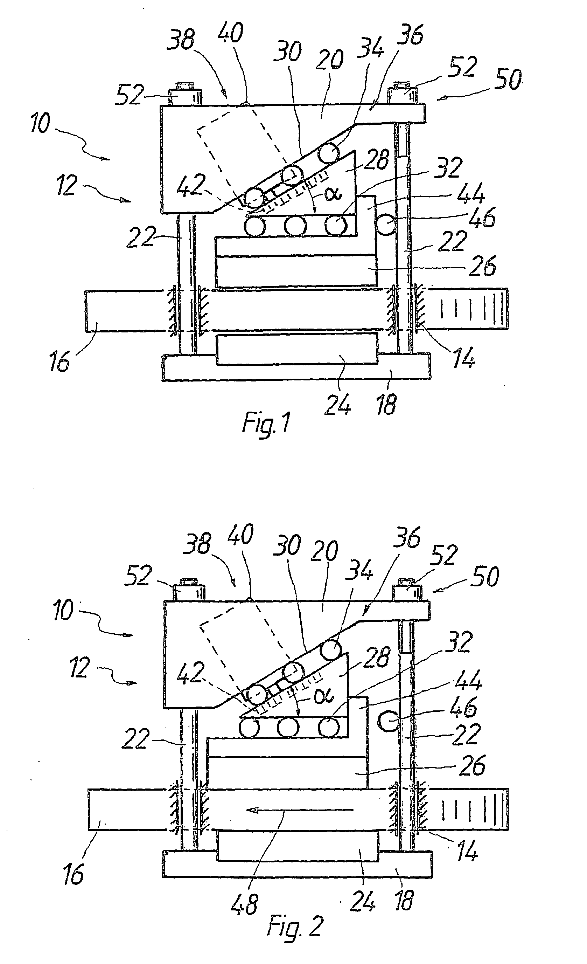

Die in Figur 1 dargestellte, erfindungsgemäße Fahrzeugbremse ist als Scheibenbremse 10 ausgebildet. Sie weist einen Bremssattel 12 auf, der als Schwimmsattel ausgeführt ist, d. h. er ist in Schiebeführungen 14 quer zu einer Bremsscheibe 16 verschiebbar geführt. Die Bremsscheibe 16 bildet einen mit der Fahrzeugbremse/Scheibenbremse 10 bremsbaren Bremskörper. Zugleich ist der Bremssattel 12 als Rahmensattel mit zwei Bremsbelaghalteplatten 18, 20 ausgebildet, die beiderseits der Bremsscheibe 16 angeordnet sind und die außerhalb der Bremsscheibe 16 mit zwei Zugankern 22 verbunden sind.

Im Bremssattel 12 liegen zwei Reibbremsbeläge 24, 26 ein. Ein - fester - Reibbremsbelag 24 ist fest, d. h. unbeweglich, auf einer der Bremsscheibe 16 zugewandten Seite einer der beiden Bremsbelaghalteplatten 18 angeordnet. Der andere - bewegliche - Reibbremsbelag 26 ist parallel und quer zur Bremsscheibe 16 beweglich, er ist auf einer gegenüberliegenden Seite der Bremsscheibe 16 wie der feste Reibbremsbelag 24 im Bremssattel 12 angeordnet.

Auf einer der Bremsscheibe 16 abgewandten Seite des beweglichen Reibbremsbelags 26 ist ein Keil 28 angeordnet, der gegenüber dem beweglichen Reibbremsbelag 26 und gegenüber dem Bremssattel 12 verschiebbar ist. Auf einer dem Keil 28 zugewandten Seite weist die Bremsbelaghalteplatte 28 eine Schrägfläche 30 auf, die ein Widerlager für den Keil 28 bildet. Die Schrägfläche 30 verläuft in einem einem Keilwinkel α des Keils 28 entsprechenden Winkel schräg zur Bremsscheibe 16. Der Keil 28 ist entlang der Schrägfläche 30 verschiebbar. Zur Reibungsminderung sind zwischen dem Keil 28 und dem beweglichen Reibbremsbelag 26 sowie zwischen dem Keil 28 und der das Widerlager bildenden Schrägfläche 30 des Bremssattels 12 zylindrische Wälzkörper 32, 34 angeordnet. Wird der bewegliche Reibbremsbelag 26 zum Bremsen an die Bremsscheibe 16 gedrückt, stützt er sich über die Wälzkörper 32, den Keil 28 und die Wälzkörper 34 an der Schrägfläche 30 des Bremssattels 12 ab. Der Keil 28 und die Schrägfläche 30 bilden einen Keilmechanismus 28, 30 und eine mechanische Selbstverstärkungseinrichtung 36, deren Wirkungsweise noch zu erläutern sein wird.

Zur Betätigung weist die Scheibenbremse 10 eine elektromechanische Betätigungseinrichtung 38 mit einem Elektromotor 40 auf, mit dem ein in der Zeichnung nicht sichtbares Zahnrad drehend antreibbar ist, das mit einer Zahnstange 42 des Keils 28 kämmt. Der Elektromotor 40 ist weitgehend von der Bremsbelaghalteplatte 20 und die Zahnstange 42 ist vom Keil 28 verdeckt und deswegen mit Strichlinien angedeutet. Die Zahnstange 42 verläuft parallel zu einer der Schrägfläche 30 zugewandten Seite des Keils 28 und somit parallel zur Schrägfläche 30. Ein Antrieb des Keils 28 wirkt parallel zur Schrägfläche 30.

Der bewegliche Reibbremsbelag 26 weist einen Mitnehmer 44 für den Keil 28 auf, der von einer der Bremsscheibe 16 abgewandten Seite vom Reibbremsbelag 26 absteht. Der Mitnehmer 44 bewirkt, dass sich der Keil 28 in einer Richtung mit dem beweglichen Reibbremsbelag 26 mitbewegt wogegen in entgegengesetzter Richtung eine Relativbewegung zwischen dem beweglichen Reibbremsbelag 26 und dem Keil 28 möglich ist. Der Mitnehmer 24 bewegt den Keil 28 in derjenigen Richtung mit, in der sich der Keil 28 entlang der Schrägfläche 30 schräg auf die Bremsscheibe 16 zu bewegt.

Des Weiteren weist die Scheibenbremse 10 eine Wegbegrenzung 46 auf, die eine Bewegung des beweglichen Reibbremsbelags 26 in einer Richtung begrenzt.
Die Wegbegrenzung 46 wird im dargestellten Ausführungsbeispiel von einem zylindrischen Wälzkörper 46 gebildet, der sich am Bremssattel 12, beispielsweise an einem der beiden Zuganker 22, abstützt. Der Wälzkörper 46 dient einer Reibungsminderung bei einer Bewegung des beweglichen Reibbremsbelags 26 quer zur Bremsscheibe 16. Die Wegbegrenzung 46 begrenzt eine Verschiebung des beweglichen Reibbremsbelags 26 in derjenigen Richtung, in der sich die Schrägfläche 30 des Bremssattels 12 von der Bremsscheibe 16 entfernt.

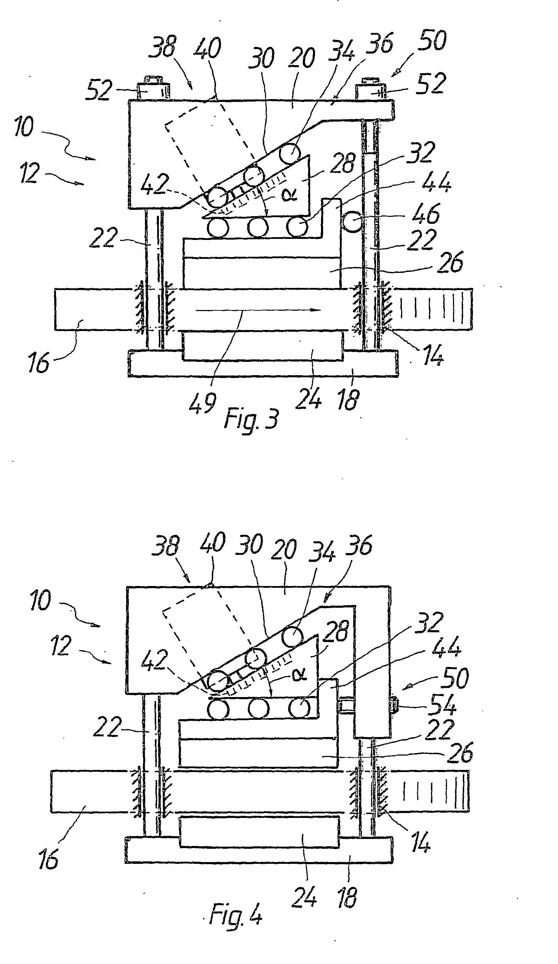

Die Funktion der erfindungsgemäßen Scheibenbremse 10 wird anhand Figur 2 erläutert, wobei angenommen wird, dass sich die Bremsscheibe 16 in Richtung des Pfeils 48, d. h. in der Zeichnung nach links, dreht. Zur Betätigung der Scheibenbremse 10 wird der Keil 28 parallel zur Schrägfläche 30 und schräg auf die Bremsscheibe 16 zu verschoben, bei der angenommenen Drehrichtung 48 der Bremsschreibe 16 nach links wird der Keil 28 ebenfalls nach links verschoben. Der bewegliche Reibbremsbelag 26 wird dabei von der Wegbegrenzung 46 abgehoben. Da sich der Keil 28 schräg auf die Bremsscheibe 16 zu bewegt drückt er den beweglichen Reibbremsbelag 26 an die Bremsscheibe 16. Durch das Andrücken des beweglichen Reibbremsbelags 26 an die Bremsscheibe 16 wird in an sich bekannter Weise der als Schwimmsattel ausgebildete Bremssattel 12 in seinen Führungen 14 quer zur Bremsscheibe 16 verschoben und drückt den festen Reibbremsbelag 24 an die gegenüberliegende Seite der Bremsscheibe 16. Die Bremsscheibe 16 wird gebremst.

Die drehende Bremsscheibe 16 übt eine Reibungskraft auf den beweglichen Reibbremsbelag 26 aus, die diesen in Richtung eines enger werdenden Keilspalts zwischen der Schrägfläche 30 und der Bremsscheibe 16 beaufschlagt und verschiebt. Über den Mitnehmer 44 beaufschlagt der bewegliche Reibbremsbelag 26 den Keil 28 ebenfalls in Richtung des enger werdenden Keilspalts zwischen der Schrägfläche 30 und der Bremsscheibe 16. Aufgrund seiner Abstützung an der das Widerlager bildenden Schrägfläche 30 übt der Keil 28 entsprechend dem Keilprinzip eine Kraft auf den beweglichen Reibbremsbelag 26 aus, die eine Kraftkomponente quer zur Bremsscheibe 16 aufweist. Diese Kraftkomponente quer zur Bremsscheibe 16 ist Teil einer Andruckkraft, die zum Teil durch die Beaufschlagung des Keils 28 durch die Betätigungseinrichtung 38 und zum Teil durch die Beaufschlagung durch den Mitnehmer 44 des beweglichen Reibbremsbelags 26 erzeugt wird. Der den Keil 28 und die Schrägfläche 30 aufweisende Keilmechanismus wandelt somit die von der drehenden Bremsscheibe 16 auf den an sie gedrückten Reibbremsbelag 26 ausgeübte Reibungskraft in eine Andruckkraft um, die den Reibbremsbelag 26 an die Bremsscheibe 16 drückt. Der Keilmechanismus bildet somit die bereits genannte Selbstverstärkungseinrichtung 36, die einen Teil der zum Bremsen erforderlichen Andruckkraft aus der Reibungskraft zwischen drehender Bremsscheibe 16 und an sie gedrücktem Reibbremsbelag 26 erzeugt und eine von der Betätigungseinrichtung 38 bewirkte Andruckkraft verstärkt.

Die Betätigung der Scheibenbremse 10 bei umgekehrter Drehrichtung 49 der Bremsscheibe 16 ist in Figur 3 dargestellt. Hier wird ebenfalls der bewegliche Reibbremsbelag 26 durch Verschiebung des Keils 28 in Richtung des enger werdenden Keilspalts zwischen der Schrägfläche 30 und der Bremsscheibe 16 an die Bremsscheibe 16 gedrückt. Die Verschieberichtung des Keils 28 zur Betätigung der Scheibenbremse 10 ist unabhängig von der Drehrichtung 48 der Bremsscheibe 16 und erfolgt immer in der gleichen Richtung. Eine von der drehenden Bremsscheibe 16 auf den an sie gedrückten beweglichen Reibbremsbelag 26 ausgeübte Reibungskraft beaufschlagt den Reibbremsbelag 26 nun in Richtung des sich erweiternden Keilspalts zwischen der Schrägfläche 30 und der Bremsscheibe 16 und drückt den Reibbremsbelag 26 an die Wegbegrenzung 46. Der Keil 28 entfernt sich vom Mitnehmer 44, er ist von der von der drehenden Bremsscheibe 16 auf den beweglichen Reibbremsbelag 26 ausgeübten Reibungskraft entkoppelt. Die Andruckkraft des Reibbremsbelags 26 an die Bremsscheibe 16 wird ausschließlich von der Betätigungseinrichtung 38 über den Keil 28 bewirkt, es finden weder eine Selbstverstärkung noch eine Selbstschwächung durch die Selbstverstärkungseinrichtung 36 bzw. den Keilmechanismus statt. Bei der in Figur 3 dargestellten Drehrichtung 49 der Bremsscheibe 16 ist die Scheibenbremse 10 also selbsthilfeneutral. Auch bei stehender Bremsscheibe 16 entsprechen die Verhältnisse den vorstehend anhand Figur 3 erläuterten Verhältnissen, es finden weder eine Selbstverstärkung noch eine Selbstschwächung statt. Dies ist wichtig bei Verwendung der Scheibenbremse 10 außer als Betriebs- auch als Feststellbremse zur Verwirklichung einer Parkbremsfunktion.

Um eine Vergrößerung der Verschiebewege des Keils 28 und des beweglichen Reibbremsbelags 26 bei Verschleiß der Reibbremsbeläge 24, 26 zu vermeiden oder jedenfalls zu begrenzen, weist die erfindungsgemäße Scheibenbremse 10 eine Verschleißnachstelleinrichtung 50 auf. Mit der Verschleißnachstelleinrichtung 50 lässt sich eine lichte Weite des Bremssattels 12, d. h. ein Abstand der beiden Bremsbelaghalteplatten 18, 20 voneinander verändern. Zu diesem Zweck sind die Zuganker 22 fest in einer der beiden Bremsbelaghalteplatten 18 angebracht wogegen die andere Bremsbelaghalteplatte 20 auf den Zugankern 22 verschiebbar ist. Die Zuganker 22 gehen durch die verschiebbare Bremsbelaghalteplatte 20 hindurch und stehen auf einer der Bremsscheibe 16 abgewandten Seite aus der Bremsbelaghalteplatte 20 vor. Auf die vorstehenden Enden der Zuganker 22 sind Muttern 52 aufgeschraubt. Durch synchrones Drehen der Muttern 52 lässt sich die Bremsbelaghalteplatte 20 parallel zur anderen Bremsbelaghalteplatte 18 verschieben und eine lichte Weite des Bremssattels 12 einstellen. Dadurch ist ein Ausgleichen von Verschleiß der Reibbremsbeläge 24, 26 möglich.

Eine andere Möglichkeit der Verschleißnachstellung ist in Figur 4 dargestellt. Hier weist die Wegbegrenzung, die die Verschiebung des beweglichen Reibbremsbelags 26 in einer Richtung begrenzt, eine Stellschraube 54 auf. Durch Drehen der Stellschraube 54 lässt sich ein Verschleiß der Reibbremsbeläge 24, 26 ausgleichen. In diesem Fall ist der Bremssattel 12 starr und seine lichte Weite ist nicht verstellbar. Im Übrigen ist die in Figur 4 dargestellte Scheibenbremse 10 gleich wie die in Figuren 1 bis 3 dargestellte Scheibenbremse 10 ausgebildet und funktioniert in gleicher Weise. Übereinstimmende Bauteile sind mit gleichen Bezugszahlen versehen, zur Vermeidung von Wiederholungen wird hinsichtlich der Erläuterung von Figur 4 auf die Erläuterungen von Figuren 1 bis 3 verwiesen.

Vorzugsweise werden anstelle der dargestellten und beschriebenen, einfachen Verschließausgleicheinrichtungen 50 aufwendigere, automatische Verschleißnachstelleinrichtungen vorgesehen, die mit eigenen Stellantrieben versehen sein können oder die eine zu ihrer Einstellung erforderliche Energie von der Bewegung des Keils 28 und/oder des beweglichen Reibbremsbelags 26 ableiten (nicht dargestellt).

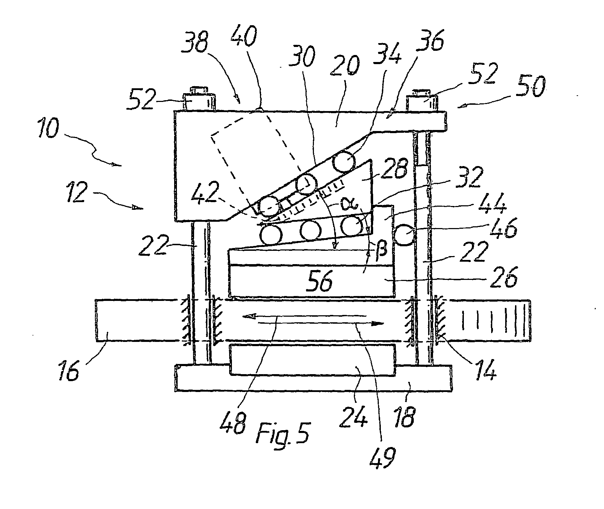

Bei der in Figur 5 dargestellten Scheibenbremse 10 weist der Keil 28 eine zweite Keilfläche 56 auf, die in einem Keilwinkel β zur Bremsscheibe 16 verläuft. Die zweite Keilfläche 56 ist der Bremsscheibe 16 zugewandt, an ihr stützt sich der bewegliche Reibbremsbelag 26 ab. Die zweite Keilfläche 56 verläuft in gleicher Richtung schräg zur Bremsscheibe 16 wie die Schrägfläche 30, an der sich der Keil 28 abstützt. Allerdings weist die zweite Keilfläche 56 einen spitzeren Keilwinkel β auf als die Schrägfläche 30. Dabei ist der Keilwinkel α als der Winkel zwischen der Schrägfläche 30 und der Bremsscheibe 16 zu sehen. Der Keil 28 mit der zweiten Keilfläche 56 bewirkt eine Kraftübersetzung beim Betätigen der Scheibenbremse 10 bei stehender Bremsscheibe 16 und bei der mit Pfeil 49 dargestellten Drehrichtung der Bremsscheibe 16, bei der die Selbstverstärkung nicht wirkt, sondern die Scheibenbremse 10 selbsthilfeneutral arbeitet. Dies hat den Vorteil, dass die Betätigungskraft bei stehendem Fahrzeug, also in der Feststell- oder Parkbremsfunktion, und bei der selbsthilfeneutralen Drehrichtung 49 der Bremsscheibe 16 geringer ist. Bei umgekehrter Drehrichtung 48 der Bremsscheibe 16, bei der die Selbstverstärkung wirksam ist, ist die Funktion der in Figur 5 dargestellten Scheibenbremse 10 gleich wie oben anhand Figuren 1 und 2 erläutert, auch die Konstruktionen der in Figuren 1 und 5 dargestellten Scheibenbremsen 10 ist abgesehen von der zweiten Keilfläche 56 gleich.

## Patentansprüche

1. Selbstverstärkende elektromechanische Fahrzeugbremse mit einem Reibbremsbelag, der in einer Drehrichtung eines mit der Fahrzeugbremse bremsbaren Bremskörpers bewegbar ist, mit einer elektromechanischen Betätigungseinrichtung, mit der der Reibbremsbelag zum Bremsen an den Bremskörper drückbar ist und mit einer mechanischen, einen Keil und ein Widerlager für den Keil aufweisenden, in einer Drehrichtung des Bremskörpers wirksamen Selbstverstärkungseinrichtung, die eine beim Bremsen vom drehenden Bremskörper auf den Reibbremsbelag ausgeübte Reibungskraft in eine Andruckkraft wandelt, die den Reibbremsbelag an den Bremskörper drückt, wobei der Keil durch die beim Bremsen vom drehenden Bremskörper auf den Reibbremsbelag ausgeübte Reibungskraft in Drehrichtung des Bremskörpers beaufschlagt wird und durch Abstützung am Widerlager aufgrund einer Keilwirkung die Andruckkraft auf den Reibbremsbelag bewirkt, **dadurch gekennzeichnet, dass** der Reibbremsbelag (26) einen Mitnehmer (44) für den Keil (28) aufweist, der den Keil (28) in der einen Drehrichtung (48) des Bremskörpers (16), bei der die Selbstverstärkungseinrichtung (36) wirksam ist, mit dem Reibbremsbelag (26) mitbewegt und dass die Fahrzeugbremse (10) eine Wegbegrenzung (46, 54) für den Reibbremsbelag (26) aufweist, die einen Weg des Reibbremsbelags (26) in entgegengesetzter Richtung begrenzt.

2. Selbstverstärkende elektromechanische Fahrzeugbremse nach Anspruch 1, **dadurch gekennzeichnet, dass** die Fahrzeugbremse (10) eine Scheibenbremse ist.

3. Selbstverstärkende elektromechanische Fahrzeugbremse nach Anspruch 1, **dadurch gekennzeichnet, dass** die Betätigungseinrichtung (38) mittelbar über den Keil (28) auf den Reibbremsbelag (26) einwirkt.

4. Selbstverstärkende elektromechanische Fahrzeugbremse nach Anspruch 1, **dadurch gekennzeichnet, dass** die Fahrzeugbremse (10) eine Verschleißausgleichseinrichtung (50) aufweist, welche einen Verschiebeweg des Mitnehmers (44) begrenzt.

5. Selbstverstärkende elektromechanische Fahrzeugbremse nach Anspruch 4, **dadurch gekennzeichnet, dass** die Fahrzeugbremse (10) eine Scheibenbremse mit einem Bremssattel (12) ist, dessen lichte Weite zum Verschleißausgleich verstellbar ist.

6. Selbstverstärkende elektromechanische Fahrzeugbremse nach Anspruch 4, **dadurch gekennzeichnet, dass** die Wegbegrenzung (54) für den Reibbremsbelag (26) zum Verschleißausgleich in und/oder entgegen der Drehrichtung (48) des Bremskörpers (16) verstellbar ist.

7. Selbstverstärkende elektromechanische Fahrzeugbremse nach Anspruch 1, **dadurch gekennzeichnet, dass** der Keil (28) eine zweite Keilfläche (56) aufweist, an der sich der Reibbremsbelag (26) abstützt.

## Claims

1. Self-energizing electromechanical vehicle brake having a friction brake lining which can move in a rotational direction of a brake element which can be braked by way of the vehicle brake, having an electromechanical actuating device, by way of which the friction brake lining can be pressed onto the brake element for braking, and having a mechanical self-energizing device which has a wedge and an abutment for the wedge, is active in one rotational direction of the brake element and converts a frictional force, which is exerted on the friction brake lining by the rotating brake element during braking, into a pressing force which presses the friction brake lining onto the brake element, the wedge being loaded in the rotational direction of the brake element by the frictional force which is exerted on the friction brake lining by the rotating brake element during braking, and bringing about the pressing force on the friction brake lining as a result of being supported on the abutment, on account of a wedging action, **characterized in that** the friction brake lining (26) has a driver (44) for the wedge (28), which driver (44) drives the wedge (28) along with the friction brake lining (26) in one rotational direction (48) of the brake element (16), in which the self-energizing device (36) is active, and **in that** the vehicle brake (10) has a travel limiter (46, 54) for the friction brake lining (26) which limits a travel of the friction brake lining (26) in the opposite direction.

2. Self-energizing electromechanical vehicle brake according to Claim 1, **characterized in that** the vehicle brake (10) is a disc brake.

3. Self-energizing electromechanical vehicle brake according to Claim 1, **characterized in that** the actuating device (38) acts on the friction brake lining (26) indirectly via the wedge (28).

4. Self-energizing electromechanical vehicle brake according to Claim 1, **characterized in that** the vehicle brake (10) has a wear compensation device (50) which limits a displacement travel of the driver (44).

5. Self-energizing electromechanical vehicle brake according to Claim 4, **characterized in that** the vehicle brake (10) is a disc brake having a brake calliper (12), the internal width of which can be adjusted for wear compensation.

6. Self-energizing electromechanical vehicle brake according to Claim 4, **characterized in that** the travel limiter (54) for the friction brake lining (26) can be adjusted in and/or counter to the rotational direction (48) of the brake element (16) for wear compensation.

7. Self-energizing electromechanical vehicle brake according to Claim 1, **characterized in that** the wedge (28) has a second wedge face (56), on which the friction brake lining (26) is supported.

## Revendications

1. Frein de véhicule électromécanique à autorenforcement composé d'une garniture de friction déplaçable dans un sens de rotation d'un corps de frein pouvant être freiné avec le frein du véhicule, d'un dispositif d'actionnement électromécanique mettant la garniture de friction en appui contre le corps de frein pour exercer un freinage, et d'un dispositif d'autorenforcement qui agissant dans un sens de rotation du corps de frein grâce à un coin et une butée pour ce coin, transforme une force de frottement exercée sur la garniture de friction lors du freinage du corps de frein en rotation en une force de pression qui appuie la garniture de friction contre le corps de freinage, le coin étant poussé par la force de frottement exercée sur la garniture de friction dans le sens de rotation du corps de frein lors du freinage du corps de frein en rotation, alors que l'effet de coin transforme l'appui sur la butée en une force de pression sur la garniture de friction,
**caractérisé en ce que**
la garniture de friction (26) présente un entraîneur (44) pour le coin (28) qui entraîne le coin (28) avec la garniture de friction (26) dans le sens de rotation (48) du corps de frein (16), sens dans lequel le dispositif d'autorenforcement (36) est actif, et le frein de véhicule (10) présente une limitation de course (46, 54) pour la garniture de friction (26) qui limite une course de la garniture de friction (26) dans le sens inverse.

2. Frein de véhicule électromécanique à autorenforcement selon la revendication 1,
**caractérisé en ce que**
le frein de véhicule (10) est un frein à disque.

3. Frein de véhicule électromécanique à autorenforcement selon la revendication 1,
**caractérisé en ce que**
le dispositif d'actionnement (38) agit indirectement sur la garniture de friction (26) par l'intermédiaire du coin (28).

4. Frein de véhicule électromécanique à autorenforcement selon la revendication 1,
**caractérisé en ce que**
le frein de véhicule (10) présente un dispositif de rattrapage d'usure (50) qui limite une trajectoire de déplacement de l'entraîneur (44).

5. Frein de véhicule électromécanique à autorenforcement selon la revendication 4,
**caractérisé en ce que**
le frein de véhicule (10) est un frein à disque avec un étrier de frein (12) dont le diamètre intérieur par rapport au rattrapage d'usure est réglable.

6. Frein de véhicule électromécanique à autorenforcement selon la revendication 4,
**caractérisé en ce que**
la limitation de course (54) pour la garniture de friction (26) par rapport au rattrapage d'usure est réglable dans le sens de rotation (48) du corps de frein (16) et/ou dans le sens inverse.

7. Frein de véhicule électromécanique à autorenforcement selon la revendication 1,
**caractérisé en ce que**
le coin (28) présente une seconde surface de coin (56) sur laquelle la garniture à friction (26) s'appuie.
